# EUROPEAN PATENT SPECIFICATION

(11) **EP 1 646 223 B1**
(45) Date of publication and mention of the grant of the patent: **30.04.2008**
(21) Application number: 05109362.3
(22) Date of filing: 07.10.2005
(51) Int. Cl.: H04N 1/405

(54) **Error Diffusion**
Fehlerdiffusion
Diffusion d erreur

(30) Priority: 11.10.2004 KR 2004080788
(43) Date of publication of application: 12.04.2006
(73) Proprietor: Samsung Electronics Co., Ltd., Suwon-si, Gyeonggi-Do (KR)
(72) Inventor: Kang, Ki-min 506-204, Hansol-maeul 5 danji Apt., Seongnam-si Gyeonggi-do (KR)
(74) Representative: Walaski, Jan Filip

(56) References cited:
- EP-A- 0 777 377
- EP-A- 0 903 933
- EP-A- 0 917 348
- US-A- 5 708 514
- US-A- 5 917 614
- US-A1- 2003 107 769
- US-B1- 6 707 576
- ESCHBACH R: "PIXEL-BASED ERROR-DIFFUSION ALGORITHM FOR PRODUCING CLUSTERED HALFTONE DOTS" JOURNAL OF ELECTRONIC IMAGING, SPIE + IS&T, US, vol. 3, no. 2, 1 April 1994 (1994-04-01), pages 198-202, XP000452075 ISSN: 1017-9909

## Description

The present invention relates to an error diffusion apparatus for performing an error diffusion on a second pixel based on a first pixel, the apparatus comprising: a binary processing unit for binarising a tone value of the first pixel based on a predetermined threshold; and a binary error diffusion unit for computing a binary error value based on a difference between the tone value of the first pixel and a binary tone value for the first pixel, and reflecting the binary error value on a tone value of the second pixel applied to the binary processing unit. The invention also relates to a method for performing error diffusion on a second pixel based on a first pixel of the invention, the method comprising: binarising a tone value of the first pixel based on a predetermined threshold; computing a binary error value based on a difference between the tone value of the first pixel and a binary tone value for the first pixel, and reflecting the binary error value on a tone value of the second pixel applied to a binary processing unit.

In general, image forming apparatuses such as printers, fax machines, copiers and printer/fax combinations express images using a plurality of pixels. Electrophotographic, inkjet and bubble jet printing methods are some examples that the image forming apparatuses utilise for creating an image from an array of pixels. These methods are rooted in the same technology that uses a control signal or a pulse for each pixel in order to transfer a toner or ink onto a printing paper for image formation. Technical advances in recent years have now brought an error diffusion filter, which expresses a color tone of an image by the number of pixels per unit area and sets an array of pixels for improving characteristics of an image such as edge characteristics and pixel distribution.

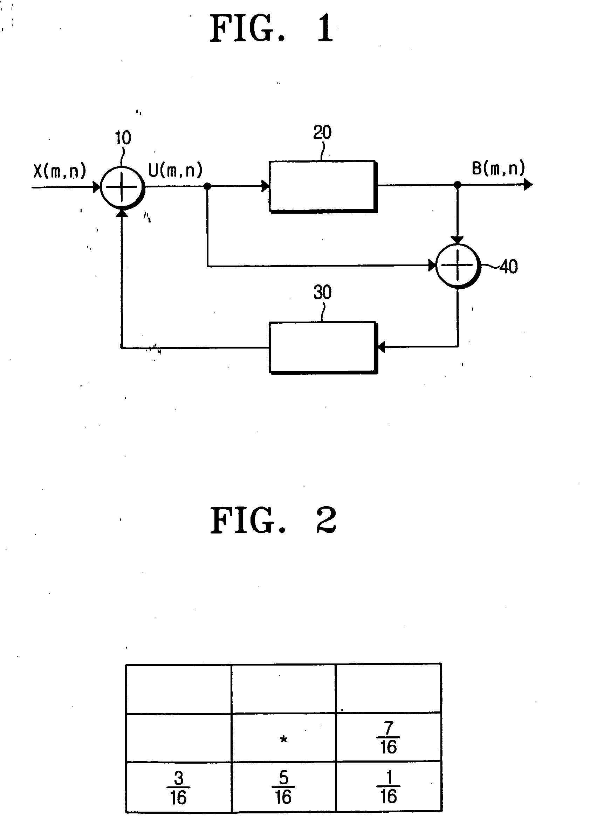

Figure 1 is a conceptual block diagram of a conventional error diffusion apparatus.

The error diffusion apparatus in Figure 1 includes a first adder 10, a binary unit 20, a second adder 40, and an error diffusion unit 30.

The first adder 10 adds an input pixel x(m,n) to an output value of the error diffusion unit 30, and provides a result of the addition to the binary unit 20. Here, the tone value range of the pixel x(m,n) is between 0 and 255, '0' representing the darkest tone and '255' representing the brightest tone. The binary unit 20 compares a predetermined threshold, such as a tone value threshold of 128, with an output value of the first adder 10, and converts the input pixel to a binary tone value. If the tone value of an input pixel is greater than the threshold, the binary unit 20 converts the input pixel to 255, and if not, 0. Thus, the converted binary tone value is either 0 or 255.

The second adder 40 adds an output tone value of the binary unit 20 from a tone value u(m,n) input to the binary unit 20 to obtain the difference therebetween, and provides the result to the error diffusion unit 30.

For example, assuming that the output tone value of the first adder 10 is 155, and the threshold of the binary unit 20 is 128, the output value of the binary unit 20 is 255. Thus, the output value of the second adder 40 becomes -100.

The error diffusion unit 30 applies a Floyd-Steinberg filter to the output value of the second adder 40. The Floyd-Steinberg filter renders weights to neighboring pixels of the pixel having the difference value provided from the second adder 40. Each of the neighboring pixels is given a different weight, and this causes error diffusion to the pixel having the tone value provided from the second adder 40.

Figure 2 conceptually illustrates a weight application system of the error diffusion unit 30 in Figure 1.

In Figure 2, the asterisk "*" indicates the position of a pixel converted to a binary tone value by the binary unit 20. As explained earlier, the error value of the pixel (*) is diffused by weights of 7/16, 5/16, 3/16 and 1/16 on the right side, lower side, lower left side and lower right side of the pixel (*), respectively.

Figures 3A to 3F conceptually represent images that are created or printed when the error diffusion apparatus of Figure 1 is applied to a laser printer.

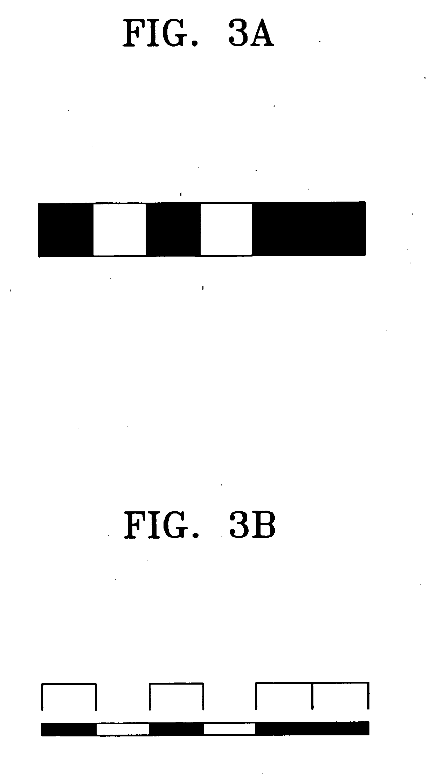

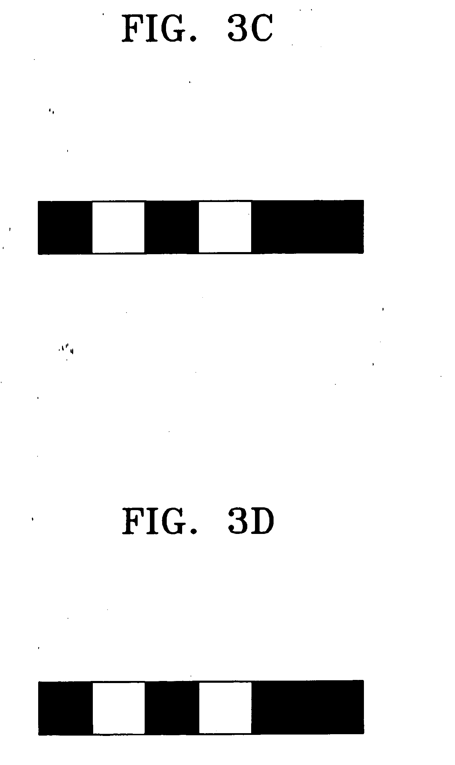

Here, Figures 3A to 3C illustrate images obtained under ideal conditions, and Figures 3D to 3F illustrate printed images obtained under normal conditions.

Specifically, Figure 3A illustrates data for a binary image scanned to a photosensitive drum of a laser printer, Figure 3B depicts a charge pattern that is focused on the photosensitive drum (OPC) corresponding to the binary image illustrated in Figure 3A, and Figure 3C illustrates a printed image on the paper.

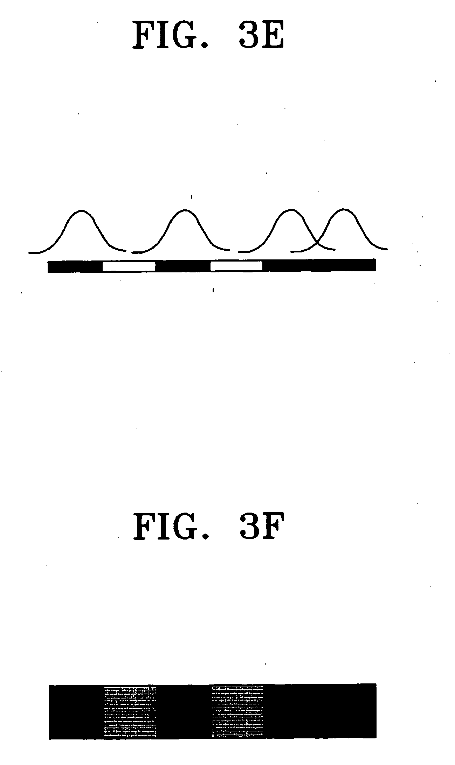

Next, Figure 3D illustrates data for a binary image scanned to a photosensitive drum of a laser printer, Figure 3E depicts a charge pattern that is focused on the photosensitive drum (OPC) as opposed to the binary image illustrated in Figure 3A, and Figure 3F illustrates an image printed on the paper. As shown in Figure 3D, when a laser beam is scanned onto the photosensitive drum to express a pixel, neighboring pixels of the target pixel are influenced by the energy of the laser beam. The influence is stronger when the distance between pixels is shorter and a laser beam is scanned onto the photosensitive drum with greater frequency. For instance, images like the printed image of Figure 3F are usually cross contaminated and deteriorate the image quality.

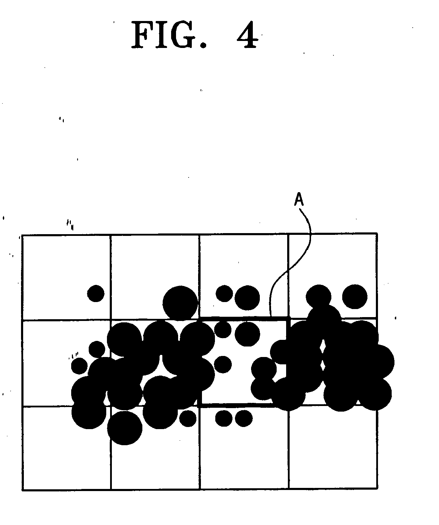

Figure 4 illustrates one example of actual printed images that are affected by the laser beam energy discussed in relation to Figures 3D to 3F.

In the drawing, there are two dots, each dot being expressed in a pixel having a plurality of binary tone values. When a laser printer forms an image in a plurality of pixels onto a photosensitive drum and fixes a toner onto a printing paper, sometimes there is an area such as the area "A" of Figure 4 for example, having certain tones due to the energy of a laser beam corresponding to each pixel, and not having 255 tones. This phenomenon occurs more often as the number of pixels forming each dot is increased, and reduces the range of tones that can possibly be expressed.

Eschbach R: "Pixel-based error-diffusion algorithm for producing clustered halftone dots" Journal of Electronic Imaging, Spie + IS&T, US, vol. 3, no. 2, 1 April 1994 (1994-04-01), pages 198-202, XP000452075 ISSN: 1017-9909 describes a pixel-based error diffusion algorithm for producing clustered halftone dots.

To generate a clustered dot structure, a method is described that uses a threshold variation which is a periodic function of the spatial coordinate.

EP-A-0 903 933 discloses an error diffusion method and apparatus. If the group of subpixel values from the thresholding process produce a pattern containing an isolated subpixel, the group of subpixel values is modified to produce a pattern without an isolated subpixel.

It is, therefore, an object of the present invention to provide an error diffusion apparatus for clustering each pixel forming an image and increasing a range of expressible tones for an image, so that a high quality image can be obtained.

The invention which is defined in its broadest aspects in claim 1 and claim 6 comprises an error diffusion apparatus as set out in claim 1 and an error diffusion method as set out in claim 6.

If the first pixel and the second pixel conform to a cluster pattern, the cluster forming unit forms the first and second pixels in one cluster by increasing/decreasing a threshold of the binary processing unit for the second pixel. In this case, the cluster forming unit may cluster first and second pixels only if the first pixel is in a predetermined position with respect to the second pixel, the predetermined position being one of: the first pixel being on the left side of the second pixel, the upper side of the second pixel, the left and upper sides of the second pixel, the left and upper left sides of the second pixel, the upper and upper left sides of the second pixel, the upper and upper right sides of the second pixel, the left and successive upper left sides of the second pixel, the left, and successive upper left and upper sides of the second pixel, and the left, and successive upper left, upper, and upper right sides of the second pixel. In either case, the cluster forming unit (200) does not cluster the first and second pixels, if the first pixel is positioned in a diagonal direction away from the second pixel.
the cluster forming unit may decrease the threshold in proportion to the size of a cluster formed of the first and second pixels.

The cluster forming unit may have a probability distribution with a Gaussian function around the predetermined threshold, and increases/decreases the threshold for the second pixel according to the distribution function.

The cluster forming unit may decrease the threshold in proportion to a different cluster size by the cluster pattern.

In either case, the step of determining may comprise decreasing the threshold in proportion to the size of a cluster formed of the first and second pixels.

Embodiments of the present invention will now be described with reference to the accompanying drawings, in which:
Figure 1 is a block diagram illustrating a conventional error diffusion apparatus;
Figure 2 is a diagram illustrating a conventional weight application system of the error diffusion unit of Figure 1;
Figures 3A to 3F are diagrams illustrating images that are created or printed when the error diffusion apparatus of Figure 1 is applied to a conventional laser printer;
Figure 4 is a diagram illustrating one example of printed images affected by a laser beam energy which is described in relation to Figures 3D to 3F according to a conventional method;

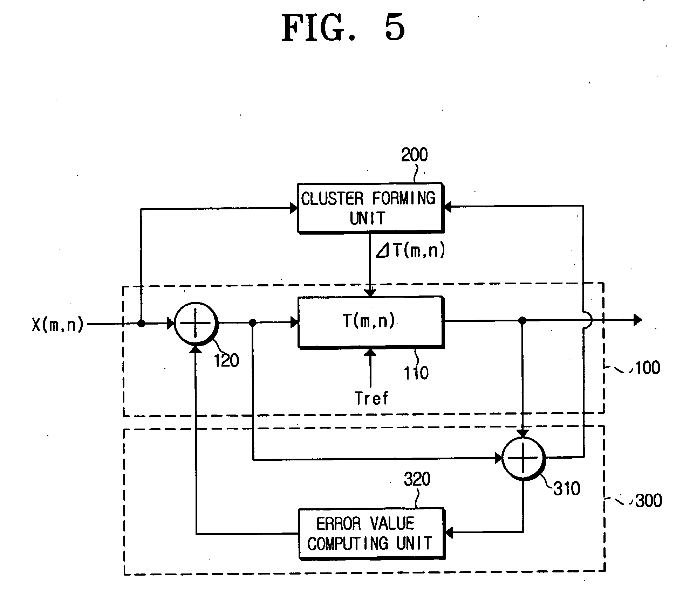

Figure 5 is a block diagram illustrating an error diffusion apparatus according to an embodiment of the present invention;

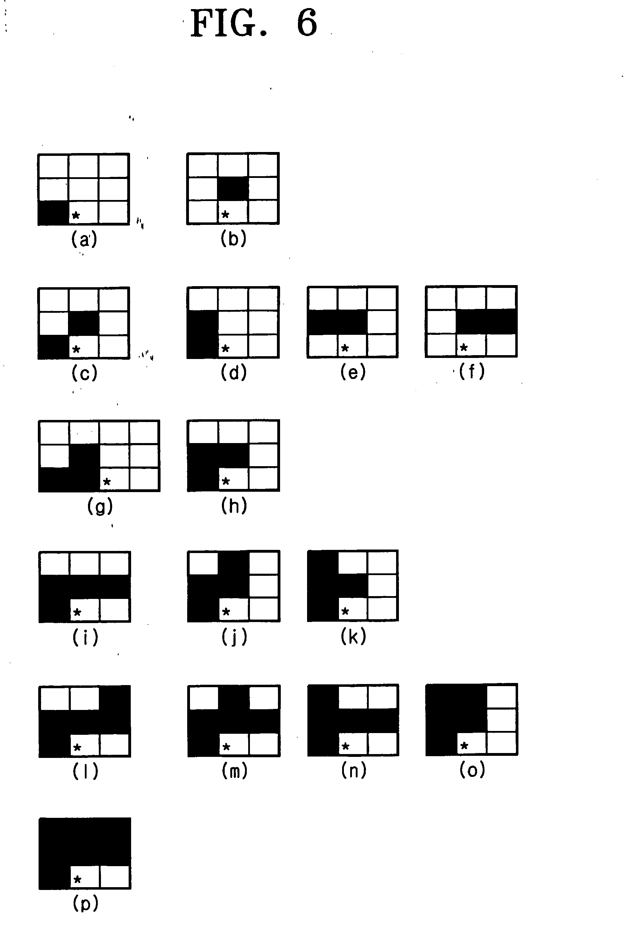

Figures 6A to 6P are diagrams illustrating examples of cluster patterns provided to a cluster forming unit in the Figure 5 apparatus;

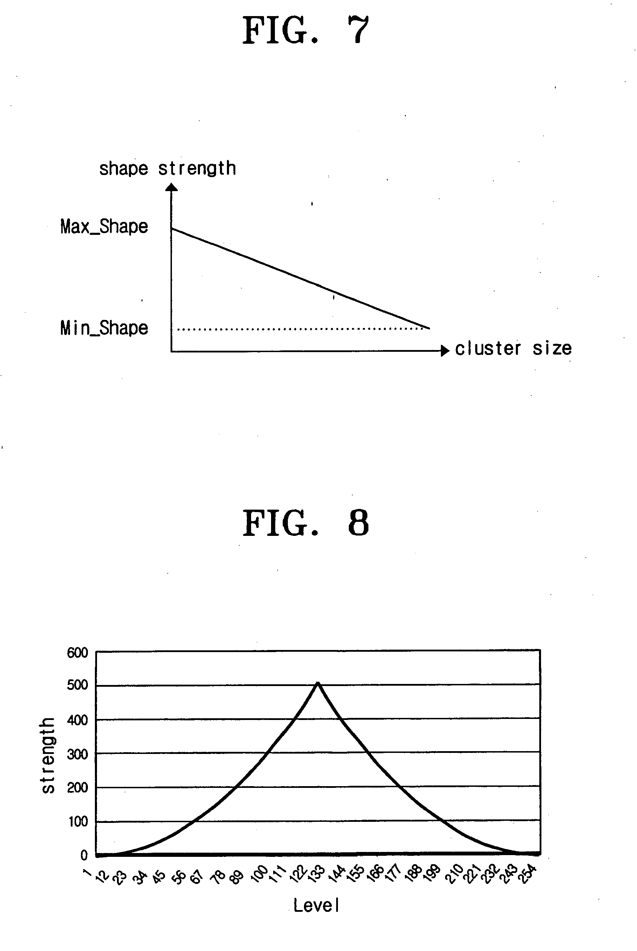

Figure 7 is a graph illustrating a relationship between cluster sizes and correction values (ΔT(m,n)); and
Figure 8 is a graph illustrating a relationship between tone values and correction values of a pixel.

Throughout the drawings, the same or similar elements, features and structures are represented by like reference numerals.

Figure 5 is a conceptual block diagram of an embodiment of error diffusion apparatus in accordance with the present invention.

Referring to Figure 5, the error diffusion apparatus comprises a binary processing unit 100, a cluster forming unit 200, and a binary error value computing unit 300.

The binary processing unit 100 converts a tone value of an input pixel x(m,n) to a tone values of either 0 or 255 by comparing the input tone value to a predetermined threshold Tref. The tone value '0' represents the darkest tone, whereas the tone value '255' represents the brightest tone. Preferably, the threshold Tref has a tone value of 128, being the mid point between 0 and 255. If the tone value of an input pixel x(m,n) is less than the threshold Tref, the binary processing unit 100 converts and outputs the tone of the pixel as '0', and if not, '255'.

The cluster forming unit 200 has a predetermined cluster pattern, and determines on the basis of the cluster pattern whether to form a cluster among the pixels. If a result of the determination is that neighboring pixels have good positions suitable for the cluster pattern and have the same binary tone value, the cluster forming unit 200 forms those pixels into one cluster. In this manner, it becomes possible to prevent deteriorations in image characteristics caused by a laser beam scanning on each pixel through on/off switching processes. That is, when a laser beam undergoes on/off switching processes, the cluster forming unit 200 minimises interferences among pixels caused by the energy of the laser beam for each pixel.

Figures 6A to 6P are diagrams illustrating examples of cluster patterns provided to the cluster forming unit 200. With these patterns, a cluster is present.

For convenience all pixels shown in Figure 6 are shown as having an exemplary 3x3 grid structure. The black shaded areas indicate pre-processed pixels, and areas with asterisks indicate post-processed pixels. Hereinafter, the pre-processed pixels will be referred to as first pixels, and the post-processed pixels will be referred to as second pixels, respectively. Here, the first pixels refer to pixels that are processed by the error diffusion apparatus before the second pixels, and there can be more than one pre-processed pixel. The cluster patterns will now be described in greater detail in reference to Figures 6A to 6P.

Figure 6A shows that the first pixel is provided on the left side of the second pixel;

Figure 6B shows that the first pixel is provided above also known as on the upper side of the second pixel;

Figure 6C shows that the first pixels are provided on the left and upper sides of the second pixel, respectively;

Figure 6D shows that the first pixels are provided on the left and upper left sides of the second pixel, respectively;

Figure 6E shows that the first pixels are provided on the upper and upper left sides of the second pixel, respectively;

Figure 6F shows that the first pixels are provided on the upper and upper right sides of the second pixel, respectively;

Figure 6G shows that the first pixels are provided on the left and successive upper left sides of the second pixel;

Figures 6H, J, K, N and O show that the first pixels are provided on the left, and successive upper left and upper sides of the second pixel; and

Figures 6 I, J, M and P show that the first pixels are provided on the left, and successive upper left, upper and upper right sides of the second pixel.

When the first pixel and the second pixel are in a diagonal direction, they cannot be clustered. This is because when the first pixel and the second pixel are in a diagonal direction, the correlation between the two pixels is reduced and there is a high possibility that the diagonal positions of the pixels are influenced by external noise.

When the first pixel and the second pixel are clustered, the resolution of an image is usually reduced in proportion to the cluster size. For instance, the resolution of an image in a relatively large cluster unit is lower than the resolution of an image in a small pixel unit. Therefore, when the cluster forming unit forms the first pixel and the second pixel in a cluster according to the cluster patterns illustrated in Figures 6A to 6P, it increases/decreases a correction value (ΔT(m,n)) being provided to the binary unit 110, so that the cluster size formed in the binary processing unit 100 can be limited. More details on this are provided with reference to Figure 7.

Figure 7 graphically shows a correlation between cluster sizes and correction values (ΔT(m,n)). In particular, the graph in Figure 7 shows a correlation between the cluster size and the shape strength (Shape_strength), which is a variable determining the magnitude of the correction value (ΔT(m,n)). The variable (Shape_strength) decreases proportionally to the cluster size, and by reducing the correction value (ΔT(m,n)) it is possible to control the distribution of binary tone values from the binary processing unit 100 to be 255, making output images brighter. This means that the distribution of clustered black shaded pixels (tone value of 0) is reduced.

In case of clustering the first pixel and the second in one cluster, it can be unnatural to form the cluster in a shadow area or a highlight area. For instance, if a large cluster is formed in a highlight area of an image, the image looks unnatural and it is not necessary to form a cluster in a shadow area. As such, the cluster forming unit 200 has an additional function of determining whether or not to form a cluster according to the tone value of an input pixel. More details on this are provided in reference to Figure 8.

Figure 8 is a graph showing the correlation between tone values and correction values of a pixel. As can be seen in Figure 8, the graph has a probability distribution similar to a Gaussian function. Thus, the parameter (strength) that adjusts the magnitude of the correction value (ΔT(m,n)) according to the tone value of an input pixel is normally distributed being increased and decreased around the median tone value (e.g., tone value of 128). When the tone value of an input pixel is greater or smaller than the medium tone value, the strength is decreased, and by reducing the correction value (ΔT(m,n)) provided from the cluster forming unit 200 to the binary unit 110 it is possible to control the distribution of binary tone values output from the binary processing unit 100 to be 255, making output images brighter. This means that the distribution of clustered black shaded pixels (tone value of 0) is reduced.

Referring to Figure 5, the binary processing unit 100 comprises a first adder 120 and a binary unit 110.

The first adder 120 adds an input pixel x(m,n) to an output value of the binary error value computing unit 300, and provides a result of the addition to the binary unit 110. Herein, the pixel x(m, n) has tone values ranging from 0 to 255. The binary unit 110 compares a predetermined threshold Tref to the output value of the first adder 120, and converts the input pixel to a binary tone value. If the tone value of an input pixel is greater than the threshold Tref, the binary unit 110 converts the input pixel to 255, and if not, 0. Here, the binary unit 110 increases/decreases a threshold Tref by the correction value (ΔT(m,n)) provided from the cluster forming unit 200, in order to ensure that the cluster size is not increased excessively or the cluster is not easily formed in the shadow area and the highlight area of an image.

The second adder 310 adds an output tone value of the binary unit 20 from a tone value u(m,n) input to the binary unit 20 to obtain a difference therebetween, and provides a result to the error value computing unit 320.

For example, suppose that the output tone value from the first adder 10 is 155, and the threshold of the binary unit 110 is 128. In this case, since the output value of the binary unit 110 is 255, the output value of the second adder 310 becomes -100.

The error value computing unit 320 applies a filter such a Floyd-Steinberg filter to the output value of the second adder 310. The Floyd-Steinberg filter renders weights to neighboring pixels of the pixel having the difference value provided from the second adder 310. Each of the neighboring pixels is given a different weight, and this causes error diffusion to the pixel having the tone value provided from the second adder 310. In order to diffuse the error value, the Floyd-Steinberg filter renders weights of 5/16, 3/16, 7/16 and 1/16 on the lower, lower left, right and lower right sides of the pixel (*), respectively. The diffused error value is provided to the first adder 120. Then, the first adder 120 adds a weight-applied error value to the target pixel and provides the result to the binary unit 110.

As described above, the embodiment clusters each pixel that forms an image. As a result, switching noises generated from the image forming process in the pixel unit can be greatly reduced, and the tone value range of an image is expanded. In addition, the embodiment can be advantageously used for preventing deteriorations in image quality by limiting the cluster size and restricting the cluster formation in the shadow and highlight areas of an image. The embodiment provides error diffusion clustering to form an image using pixels, thereby improving image characteristics.

## Claims

1. An error diffusion apparatus for performing an error diffusion on a second pixel based on a first pixel, the apparatus comprising:
a binary processing unit (110) for binarising a tone value of the first pixel based on a predetermined threshold; and
a binary error diffusion unit (320) for computing a binary error value based on a difference between the tone value of the first pixel and a binary tone value for the first pixel, and reflecting the binary error value on a tone value of the second pixel applied to the binary processing unit;
**characterised by**:
a cluster forming unit (200) for determining whether to form a cluster for the first and second pixels, in reference to a cluster pattern and a binary tone value of the first pixel and, if the first pixel and the second pixel conform to a cluster pattern, the cluster forming unit (200) forms the first and second pixels in one cluster by increasing/decreasing a threshold of the binary processing unit (110) for the second pixel.

2. The apparatus according to claim 1, wherein the cluster forming unit clusters first and second pixels only if the first pixel is in a predetermined position with respect to the second pixel, the predetermined position being one of: the first pixel being on the left side of the second pixel, the upper side of the second pixel, the left and upper sides of the second pixel, the left and upper left sides of the second pixel, the upper and upper left sides of the second pixel, the upper and upper right sides of the second pixel, the left and successive upper left sides of the second pixel, the left, and successive upper left and upper sides of the second pixel, and the left, and successive upper left, upper, and upper right sides of the second pixel.

3. The apparatus according to claim 1 or 2, wherein the cluster forming unit (200) does not cluster the first and second pixels, if the first pixel is positioned in a diagonal direction away from the second pixel..

4. The apparatus according to claim 1, wherein the cluster forming unit (200) decreases the threshold in proportion to the size of a cluster formed of the first and second pixels.

5. The apparatus according to claim 1, wherein the cluster forming unit (110) has a probability distribution with a Gaussian function around the predetermined threshold, and increases/decreases the threshold for the second pixel according to the distribution function.

6. A method for performing error diffusion on a second pixel based on a first pixel, the method comprising:
binarising a tone value of the first pixel based on a predetermined threshold;
computing a binary error value based on a difference between the tone value of the first pixel and a binary tone value for the first pixel, and reflecting the binary error value on a tone value of the second pixel applied to a binary processing unit;
**characterised by**:
determining whether to form a cluster for the first and second pixels, in reference to a cluster pattern and a binary tone value of the first pixel, and forming the first and second pixels in one cluster by increasing/decreasing the threshold for the second pixel if the first pixel and the second pixel conform to the cluster pattern.

7. The method according to claim 6, wherein the step of determining comprises:
decreasing the threshold in proportion to the size of a cluster formed of the first and second pixels.

## Patentansprüche

1. Error-Diffusion-Vorrichtung zur Durchführung einer Error-Diffusion bei einem zweiten Pixel auf der Basis eines ersten Pixels, wobei die Vorrichtung aufweist:
eine Binärverarbeitungseinheit (110) zur Binarisierung eines Tonwerts des ersten Pixels auf der Basis eines vorgegebenen Grenzwerts; und
eine Binär-Error-Diffusion-Einheit (320) zur Errechnung eines binären Fehlerwerts auf der Basis einer Differenz zwischen dem Tonwert des ersten Pixels und einem binären Tonwert für das erste Pixel und zur Spiegelung des binären Fehlerwerts auf einen Tonwert des zweiten Pixels, der in die Binärverarbeitungseinheit eingebracht wird;
**gekennzeichnet durch**:
eine Clusterbildungseinheit (200) zur Ermittlung, ob ein Cluster für die ersten und zweiten Pixel in Bezug auf ein Clustermuster und einen binären Tonwert des ersten Pixels zu bilden ist, und wenn das erste Pixel und das zweite Pixel einem Clustermuster entsprechen, bildet die Clusterbildungseinheit (200) die ersten und zweiten Pixel in einem Cluster aus, indem ein Grenzwert der Binärverarbeitungseinheit (110) für das zweite Pixel erhöht/verringert wird.

2. Vorrichtung nach Anspruch 1, wobei die Clusterbildungseinheit (200) die ersten und zweiten Pixel nur clustert, wenn sich das erste Pixel auf einer vorgegebenen Position in Bezug auf das zweite Pixel befindet, wobei die vorgegebene Position eine der folgenden ist: das erste Pixel befindet sich auf der linken Seite des zweiten Pixels, der oberen Seite des zweiten Pixels, den linken und oberen Seiten des zweiten Pixels, den linken und oberen linken Seiten des zweiten Pixels, den oberen und oberen linken Seiten des zweiten Pixels, den oberen und oberen rechten Seiten des zweiten Pixels, den linken und folgenden oberen linken Seiten des zweiten Pixels, den linken und folgenden oberen linken und oberen Seiten des zweiten Pixels und den linken und folgenden oberen linken, oberen und oberen rechten Seiten des zweiten Pixels.

3. Vorrichtung nach Anspruch 1 oder 2, wobei die Clusterbildungseinheit (200) die ersten und zweiten Pixel nicht clustert, wenn das erste Pixel in einer diagonalen Richtung vom zweiten Pixel entfernt positioniert ist.

4. Vorrichtung nach Anspruch 1, wobei die Clusterbildungseinheit (200) den Grenzwert proportional zur Größe eines Clusters verringert, das aus den ersten und zweiten Pixeln gebildet wurde.

5. Vorrichtung nach Anspruch 1, wobei die Clusterbildungseinheit (200) eine Wahrscheinlichkeitsverteilung mit einer Gaußschen Funktion um den vorgegebenen Grenzwert aufweist und den Grenzwert für das zweite Pixel gemäß der Verteilungsfunktion erhöht/verringert.

6. Verfahren zur Durchführung einer Error-Diffusion bei einem zweiten Pixel auf der Basis eines ersten Pixels, wobei das Verfahren aufweist:
Binarisieren eines Tonwerts des ersten Pixels auf der Basis eines vorgegebenen Grenzwerts;
Errechnen eines binären Fehlerwerts auf der Basis einer Differenz zwischen dem Tonwert des ersten Pixels und einem binären Tonwert für das erste Pixel und Spiegeln des binären Fehlerwerts auf einen Tonwert des zweiten Pixels, das in die Binärverarbeitungseinheit eingebracht wird;
**gekennzeichnet durch**:
Ermitteln, ob ein Cluster für die ersten und zweiten Pixel in Bezug auf ein Clustermuster und einen binären Tonwert des ersten Pixels zu bilden ist, und Ausbilden der ersten und zweiten Pixel in einem Cluster, indem der Grenzwert für das zweite Pixel erhöht/verringert wird, wenn das erste Pixel und das zweite Pixel dem Clustermuster entsprechen.

7. Verfahren nach Anspruch 6, wobei der Schritt des Ermittelns aufweist:
Verringern des Grenzwerts proportional zur Größe eines Clusters, das aus den ersten und zweiten Pixeln gebildet wurde.

## Revendications

1. Dispositif de diffusion d'erreur destiné à effectuer une diffusion d'erreur sur un deuxième pixel sur la base d'un premier pixel, le dispositif étant constitué :
d'un module (110) de traitement binaire destiné à rendre binaire une valeur de teinte d'un premier pixel sur la base d'un seuil prédéterminé ; et
d'un module (320) de diffusion d'erreur binaire destiné à calculer une valeur d'erreur binaire sur la base d'une différence entre la valeur de teinte du premier pixel et une valeur de teinte binaire pour le premier pixel, et à refléter la valeur d'erreur binaire sur une valeur de teinte du deuxième pixel appliquée au module de traitement binaire ;
**caractérisé par** :
un module (200) de formation de groupement destiné à déterminer s'il convient de former un groupement pour les premier et deuxième pixels, en référence à un motif de groupement et à une valeur de teinte binaire du premier pixel et, si le premier pixel ainsi que le deuxième pixel sont conformes à un motif de groupement, le module (200) de formation de groupement forme les premier et deuxième pixels dans un groupement en augmentant/diminuant un seuil du module (110) de traitement binaire pour le deuxième pixel.

2. Dispositif selon la revendication 1, dans lequel le module de formation de groupement met en groupement les premier et deuxième pixels seulement si le premier pixel est dans une position prédéterminée par rapport au deuxième pixel, la position prédéterminée étant l'une parmi : le premier pixel étant du côté gauche du deuxième pixel, du côté supérieur du deuxième pixel, des côtés gauche et supérieur du deuxième pixel, des côtés gauche et supérieur gauche du deuxième pixel, des côtés supérieur et supérieur gauche du deuxième pixel, des côtés supérieur et supérieur droit du deuxième pixel, des côtés gauche et supérieur gauche successifs du deuxième pixel, des côtés gauche, et supérieur gauche et supérieur successifs du deuxième pixel, des côtés gauche, et supérieur gauche, supérieur et supérieur droit successifs du deuxième pixel.

3. Dispositif selon la revendication 1 ou 2, dans lequel le module (200) de formation de groupement ne met pas en groupement les premier et deuxième pixels si le premier pixel est positionné dans une direction diagonale à partir du deuxième pixel.

4. Dispositif selon la revendication 1, dans lequel le module (200) de formation de groupement diminue le seuil proportionnellement à la taille d'un groupement formé des premier et deuxième pixels.

5. Dispositif selon la revendication 1, dans lequel le module (110) de formation de groupement a une distribution de probabilité selon une fonction Gaussienne autour du seuil prédéterminé, et augmente/diminue le seuil pour le deuxième pixel conformément à la fonction de distribution.

6. Procédé pour effectuer une diffusion d'erreur sur un deuxième pixel sur la base d'un premier pixel, le procédé étant constitué :
d'une transformation binaire d'une valeur de teinte d'un premier pixel sur la base d'un seuil prédéterminé ;
d'un calcul d'une valeur d'erreur binaire sur la base d'une différence entre la valeur de teinte du premier pixel et une valeur de teinte binaire pour le premier pixel, et d'un reflet de la valeur d'erreur binaire sur une valeur de teinte du deuxième pixel appliquée à un module de traitement binaire ;
**caractérisé par** :
une détermination s'il convient de former un groupement pour les premier et deuxième pixels, en référence à un motif de groupement et à une valeur de teinte binaire du premier pixel, et, si le premier pixel ainsi que le deuxième pixel sont conformes au motif de groupement, une formation des premier et deuxième pixels dans un groupement en augmentant/diminuant le seuil pour le deuxième pixel.

7. Procédé selon la revendication 6, dans lequel l'étape de détermination comporte :
une diminution du seuil proportionnellement à la taille d'un groupement formé des premier et deuxième pixels.
